# EUROPEAN PATENT SPECIFICATION

(11) **EP 1 061 387 B1**
(45) Date of publication and mention of the grant of the patent: **09.01.2008**
(21) Application number: 00304770.1
(22) Date of filing: 06.06.2000
(51) Int. Cl.: G02B 6/25

(54) **Process for a system comprising a plastic optical fibre**
Prozess für ein System mit optischer Faser aus Kunststoff
Pocédé pour un système comprenant une fibre optique plastique

(30) Priority: 17.06.1999 US 139614 P; 07.07.1999 US 349191
(43) Date of publication of application: 20.12.2000
(73) Proprietor: Chromis Fiberoptics, LLC, Warren, NJ 07059 (US)
(72) Inventor: Blyler, Lee L., Jr., Basking Ridge, New Jersey 07920 (US); Shevchuk, George John, Matawan, New Jersey 07747 (US); White, Whitney, Chatham, Morris, New Jersey 07928 (US)
(74) Representative: Schoppe, Fritz

(56) References cited:
- EP-A- 0 045 681
- EP-A- 0 267 744
- EP-A- 0 579 521
- WO-A-83/02269
- WO-A-96/33430
- CA-A- 1 166 217
- DE-A- 3 317 304
- FR-A- 2 492 363
- FR-A- 2 535 706
- PATENT ABSTRACTS OF JAPAN vol. 1999, no. 02, 26 February 1999 (1999-02-26) & JP 10 307213 A (ASAHI GLASS CO LTD), 17 November 1998 (1998-11-17)
- PATENT ABSTRACTS OF JAPAN vol. 012, no. 107 (P-686), 7 April 1988 (1988-04-07) & JP 62 239110 A (MITSUBISHI RAYON CO LTD), 20 October 1987 (1987-10-20)
- PATENT ABSTRACTS OF JAPAN vol. 012, no. 464 (M-771), 6 December 1988 (1988-12-06) & JP 63 188485 A (TORAY IND INC;OTHERS: 01), 4 August 1988 (1988-08-04)
- PATENT ABSTRACTS OF JAPAN vol. 1999, no. 01, 29 January 1999 (1999-01-29) -& JP 10 274715 A (HAKUSAN SEISAKUSHO:KK), 13 October 1998 (1998-10-13)
- PATENT ABSTRACTS OF JAPAN vol. 002, no. 019 (E-011), 8 February 1978 (1978-02-08) -& JP 52 137352 A (SUMITOMO ELECTRIC IND LTD), 16 November 1977 (1977-11-16)
- PATENT ABSTRACTS OF JAPAN vol. 014, no. 542 (P-1137), 30 November 1990 (1990-11-30) -& JP 02 230205 A (FUJITSU LTD), 12 September 1990 (1990-09-12)

## Description

### BACKGROUND OF THE INVENTION

### Field of the Invention

The invention relates to plastic optical fiber.

### Discussion of the Related Art

Glass optical fiber has become a significant transmission medium in recent years, particularly for long distance transmission applications. Such optical fiber has not found significant usage, however, in smaller scale applications, such as distribution of fiber to the desk in local area networks. In particular, glass optical fiber has not been as cost effective as, for example, copper wire, and also requires extremely precise fiber connections, e.g., end face polishing, alignment, and index-matching material. There has been interest, therefore, in pursuing plastic optical fiber (POF), which offers many of the benefits of glass optical fiber, but is expected to offer more cost effective systems. POF also offers some unique characteristics, including a larger core and desirable dispersion properties, which are expected to make connection and splicing easier.

However, connectivity approaches, e.g., termination and connection techniques, used for glass optical fiber are not necessarily desirable for plastic optical fiber. Yet, such basic issues with respect to plastic optical fiber systems must be resolved in order for POF to achieve commercial acceptance. For example, current POF connections tend to exhibit undesirably high losses, e.g., 2 to 3 dB. Thus, improved techniques for terminating POF are desired, advantageously techniques that result in low-loss connections.

WO 96/33430 discloses a cleaving tool comprising two clamps. A fiber is first clamped between the two clamps and then stretched over an anvil before bringing the stretched and tensioned fiber into contact with a sharp blade causing the fiber to cleave.

Also known in the art is cutting a fibre under a pure tensile load, a radial compressive load, or without applying any tensile or compressive load.

The present invention is based on the object of providing a method for fabricating an article comprising a plastic optical fiber having an enhanced end face.

This object is achieved by a process in accordance with claim 1.

The invention relates to POF processes and systems and involves improved termination techniques that make dry, non-polished connection more acceptable. The techniques provide good physical characteristics, i.e., smoothness, at the termination end face, thereby providing lower loss connections than conventionally obtained. For example, losses less than 1 dB have been obtained without polishing or index-matching material, e.g., for CYTOP® fiber having a polymethylmethacrylate reinforcement (CYTOP® is poly(perfluorobutenyl vinyl ether), and is available commercially from Asahi Glass Co., Japan).

According to one embodiment, POF is cut while the fiber is under axial compression, and the usable piece (or pieces) is typically removed prior to pulling back the blade or knife. The resulting termination exhibits a smooth surface that promotes low loss in a dry, non-polished connection.

The technique of the invention overcoms problems discovered to be inherent in prior, conventional cutting and cleaving techniques. For example, cleaving with slow strain rates led to poor surfaces not suitable for connection without further processing. And, significantly, cutting in tension or even in non-compression, was found to lead to branching cracks within the fiber, i.e., cracks propagating into the fiber from the end face. Branching cracks in particular are believed to contribute to the relatively high losses currently found in POF connections. The invention, by providing improved termination and thus easier, lower-loss connections, enhances the ability of POF to be incorporated into optical communication systems.

### BRIEF DESCRIPTION OF THE DRAWINGS

Fig. 1 illustrates branching cracks typically encountered with conventional termination techniques.
Fig. 2 illustrates a tool useful for terminating plastic optical fiber according to an embodiment of the invention.

### DETAILED DESCRIPTION OF THE INVENTION

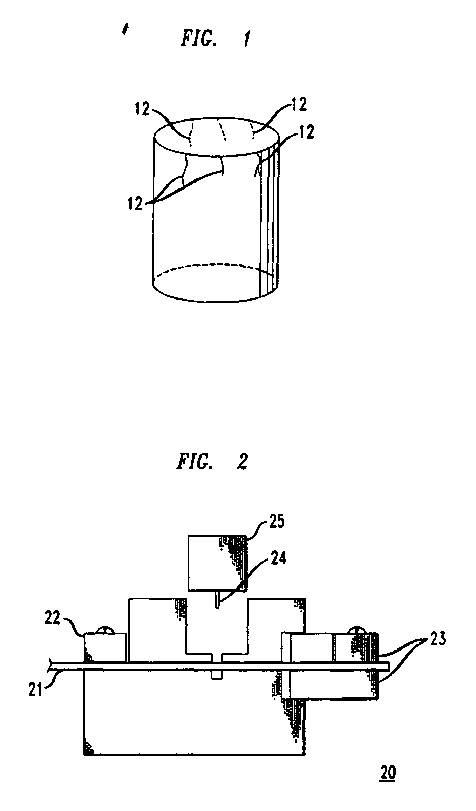

According to the invention, it is possible to provide non-polished POF terminations having improved physical and optical characteristics, e.g., smoothness, and thereby provide lower losses when preparing dry, non-polished connections. (Non-polished indicates that polishing of the terminated end faces is not performed prior to connection. Dry indicates that index-matching material is not used when making the connection.) It was discovered that conventional termination techniques tend to induce problems such as branching cracks in POF. As illustrated in the POF 10 shown in Fig. 1, branching cracks 12 run into the fiber 10 from the end face. The branching cracks 12 are believed to contribute to the undesirably high losses exhibited by POF connections. According to the invention, however, it is possible to terminate POF such that substantially no branching cracks are induced. (Substantially no branching cracks indicates that the actual loss measured in connection between two butt-coupled fibers with end faces prepared by a dry, non-polished preparation technique is less than ½ dB above the calculated loss for similar fibers with perfectly planar, crack-free end faces similarly butt-coupled by a dry, non-polished technique.)

According to one embodiment, POF is cut while the fiber is under axial compression, i.e., a compressive axial strain is applied prior to cutting. (It is also possible that, with some configurations, initiation of the cutting might itself induce the strain.) Typically, a compressive strain of approximately 1% is sufficient to provide a relatively smooth termination surface substantially free of branching cracks, although lower levels of strain are also suitable in some cases. The resulting usable piece (or pieces)is typically removed prior to pulling back the blade or knife, to avoid damaging the surface during such pull-back. It is possible to perform the cutting by any suitable technique, e.g., a guillotine method. Typically, a-single cutting edge is used to terminate the fiber in a direction normal to the fiber axis. A conventional razor blade, e.g., as used for shaving, is generally suitable. Such blades tend to have a cutting edge with a radius of curvature substantially less than 10 µm, more typically substantially less than 1 µm.

Previous techniques of cutting under tension or with a free end of fiber under neither compression nor tension are believed to promote unstable fracture of the POF ahead of the cutting blade. Specifically, as the blade moves through the fiber, a crack propagates through the last portion of uncut fiber before the blade reaches that portion. The defects, e.g., branching cracks, induced by such crack propagation results in a poor surface that degrades the quality of a subsequent connection, particularly when the unstable fracture occurs in both the optically active and reinforcement portions of the fiber. However, by keeping the fiber under even a small compression, this crack propagation is substantially reduced, particularly over the optically active area of the fiber. The result is a smooth termination surface that leads to a lower loss connection, even without polishing. It may also be possible to substantially avoid the detrimental tension by using an extremely thin blade to make the cut. Such a thin blade, e.g., 20 µm, might avoid the need for axial compression.

A variety of tools are suitable for providing such compressive-fiber cutting. In the cutting tool 20 shown in Fig. 2, a fiber 21 is threaded through the tool 20 and clamped into a fixed clamp 22 at one end and a floating clamp 23 at the other end. The floating clamp 23 is pushed toward the fixed clamp 22, providing compression, and a blade 24 located in a housing 25 is pushed through the fiber 21. The cut fiber 21 is then unclamped and removed, typically before pulling back the blade 24.

According to the invention, therefore, plastic optical fiber is capable of being terminated such that relatively smooth end faces result. Moreover, the termination techniques are easier than conventional techniques used for glass optical fiber. And, even with this reduced complexity, connections between the resultant end faces, without polishing and without index-matching material, are able to exhibit a relatively low loss of less than 1 dB. The termination techniques of the invention therefore ease the overall design and set-up of various systems that use POF, e.g., local area networks, campus systems, and consumer-installed home systems, thereby reducing cost.

The invention will be further clarified by the following examples, which are intended to be exemplary.

### Example 1

A 2.5 m length of a plastic optical fiber with a 235 µm diameter CYTOP® center section (including both doped and undoped material) and a 500 µm diameter outer polymethylmethacrylate reinforcement was cut in two with a knife. Then, using a tool such as shown in Fig. 2, each fiber was axially compressed near the cut end, under an approximately 1% strain, and a conventional double-edged razor blade was pressed completely through each fiber, removing approximately ½ inch from each fiber's end. These two terminated ends were mated in an alignment sleeve, with the other two ends connected to a 850 nm laser source and a large area photodetector, respectively. The amount of light transmitted was measured and compared to the amount transmitted through the original uncut fiber length. The loss resulting from the connection was about 0.7dB.

## Claims

1. A process for fabricating an article comprising a plastic optical fiber, said process comprising the steps of:
providing plastic optical fiber; and
cutting the fiber by means of a cutting tool at a predetermined cutting point on the fiber;
**characterized by** the steps of:
affixing a length of the fiber at two spaced points within a support structure having a bore through which the fiber extends and in which the fiber is held straight and moving one of the two points towards the other while the bore retains the fiber from buckling to thereby introduce axial compression into the length of the fiber between the two spaced points;
directing the cutting tool into contact with the compressed fiber in a direction perpendicular to the axis of the fiber to thereby cut the fiber;
wherein the cutting tool is a blade and is directed into a recess running perpendicular to the bore through the support structure.

2. The process of claim 1, wherein the step of introducing axial compression comprises compressing the fiber to produce at least 1% of compressive strain on the fiber.

## Patentansprüche

1. Ein Prozess zum Fertigen eines Artikels, der eine Kunststoffoptikfaser aufweist, wobei der Prozess folgende Schritte aufweist:
Bereitstellen einer Kunststoffoptikfaser; und
Schneiden der Faser mittels eines Schneidewerkzeugs an einem vorbestimmten Schneidepunkt an der Faser;
**gekennzeichnet durch** folgende Schritte:
Befestigen einer Länge der Faser an zwei beabstandeten Punkten innerhalb einer Trägerstruktur, die eine Bohrung aufweist, **durch** die sich die Faser erstreckt und in der die Faser gerade gehalten ist, und Bewegen eines der zwei Punkte zu dem anderen hin, während die Bohrung die Faser von einem Knicken zurückhält, um **dadurch** eine Axialkompression in die Länge der Faser zwischen den zwei beabstandeten Punkten einzubringen;
Richten des Schneidewerkzeugs in Kontakt mit der komprimierten Faser in eine Richtung senkrecht zu der Achse der Faser, um **dadurch** die Faser zu schneiden;
wobei das Schneidewerkzeug eine Klinge ist und in eine Ausnehmung gerichtet ist, die senkrecht zu der Bohrung durch die Trägerstruktur verläuft.

2. Der Prozess gemäß Anspruch 1, bei dem der Schritt des Einbringens einer Axialkompression ein Komprimieren der Faser aufweist, um zumindest 1 % Druckspannung an der Faser zu erzeugen.

## Revendications

1. Procédé de fabrication d'un article comprenant une fibre optique plastique, ledit procédé comprenant les étapes consistant à:
préparer une fibre optique plastique; et
découper la fibre au moyen d'un outil de coupe en un point de coupe prédéterminé sur le fibre;
**caractérisé par** les étapes consistant à:
fixer une longueur de fibre en deux points distants dans une structure de support présentant un alésage dans lequel s'étend la fibre et dans lequel la fibre est maintenue droite, et déplacer l'un des deux points vers l'autre tandis que l'alésage empêche que la fibre ne fléchisse, afin d'introduire ainsi une compression axiale dans la longueur de fibre entre les deux points distants;
amener l'outil de coupe en contact avec la fibre comprimée dans une direction perpendiculaire à l'axe de la fibre, pour couper ainsi la fibre;
dans lequel l'outil de coupe est une lame et est dirigé vers un évidement s'étendant perpendiculaire à l'alésage dans la structure de support.

2. Procédé selon la revendication 1, dans lequel l'étape consistant à introduire une compression axiale comprend la compression de la fibre, pour produire au moins 1% de déformation à la compression sur la fibre.
